Europäisches Patentamt

European Patent Office

Office européen des brevets

(19)

(11) Publication number : **0 152 058**
**B1**

(12) **EUROPEAN PATENT SPECIFICATION**

(45) Date of publication of patent specification :
21.10.87

(51) Int. Cl.⁴ : **G 11 B   5/62**

(21) Application number : 85101236.9

(22) Date of filing : 06.02.85

(54) Magnetic recording disc and process for the production thereof.

(30) Priority : 08.02.84 JP 22632/84

(43) Date of publication of application :
21.08.85 Bulletin 85/34

(45) Publication of the grant of the patent :
21.10.87 Bulletin 87/43

(84) Designated contracting states :
DE GB IT

(56) References cited :
DE-A- 2 016 422
DE-A- 2 220 544
DE-A- 2 260 043
DE-A- 2 801 856
US-A- 4 224 381

(73) Proprietor : Hitachi Maxell Ltd.
No 1-1-88, Ushitora Ibaraki-shi
Osaka-fu (JP)

(72) Inventor : Funahashi, Masaya
12-2-504, Aoba 3-chome Shimamoto-cho
Mishima-gun Osaka (JP)
Inventor : Miyata, Teruhisa c/o Hitachi Maxell Ltd.
Koyoryo 1, Koizumi Oyamazaki-cho
Otokuni-gun Kyoto (JP)
Inventor : Inoue, Kenichi
11-52, Nagata Terado-cho
Mukou-shi Kyoto (JP)
Inventor : Miyake, Akira c/o Hitachi Maxell Ltd.
Shataku B-2-1 1, Koizumi Oyamazaki-cho
Otokuni-gun Kyoto (JP)

(74) Representative : von Kreisler, Alek, Dipl.-Chem. et al
Deichmannhaus am Hauptbahnhof
D-5000 Köln 1 (DE)

Note : Within nine months from the publication of the mention of the grant of the European patent, any person may give
notice to the European Patent Office of opposition to the European patent granted. Notice of opposition shall be filed in
a written reasoned statement. It shall not be deemed to have been filed until the opposition fee has been paid (Art. 99(1)
European patent convention).

## Description

### Field of the invention

The present invention relates to a magnetic recording disc, and more particularly to a magnetic recording disc suitable for a high density recording disc and process for the production thereof.

### Background of the invention

In order to accomplish recording with a high track density on a magnetic recording disc, in other words, to make the recording tracks narrow, it is necessary to use such a magnetic recording disc having an isotropic magnetic characteristic in circumferential direction of the magnetic recording disc with a good signal/noise (S/N) ratio.

However, it has been almost impossible for magnetic recording discs produced by any known processes to record with a high track density up to 200 recording tracks per 2,54 cm (inch) of 7,62 cm (3 inch) diameter magnetic recording disc for example.

In order to obtain a recording disc having a high S/N ratio and an isotropic magnetic characteristic in a circumferential direction, improvement is usually directed to the substrate layer or magnetic layer, since the magnetic recording disc is basically formed by these layers.

As to the characteristic of the substrate, from the view point of providing a magnetic recording disc with an isotropic haracteristic relative to the circumferential direction, it is preferred to use such a material that an isotropic characteristic is excluded so that the difference between the maximum and minimum values of the coefficient of thermal expansion relative to the surface direction is lower than $8 \times 10^{-6}\ °C^{-1}$.

In a case where the difference between the maximum and minimum values of the coefficient of thermal expansion is greater than $8 \times 10^{-6}\ °C^{-1}$, the isotropy of the magnetic recording disc is lowered, whereby a high track density can not be expected.

As to the characteristic of the magnetic layer, from the view point of improving S/N ratio, it is preferred to use such magnetic material having a high flux saturation and coercive force. However, in order to increase the output with an equal linear recording density, residual magnetic flux density Br must be great.

In addition, it is also preferred to provide the magnetic layer above an undercoating layer.

The present inventors experimentally prepared a magnetic recording disc by coating the magnetic layer above an undercoating layer. The magnetic recording disc formed as above showed a high output level but there occurred a great output fluctuation and modulation noise.

As the result of the study by the inventors about the problems described above, it has been found that the degree of the output fluctuation and the modulation noise depend on the characteristic of the undercoating layer rather than the characteristic of the substrate or magnetic layer.

The undercoating layer is provided for the purposes of

1. increasing the bonding force between the substrate and the magnetic layer ;

2. preventing undesired effects to the magnetic layer from small projections and recesses on the surface of the substrate, fish eye, oligomer or filler ;

3. decreasing surface electric resistance and optical permeability.

To accomplish the items 1 and 2 it is sufficient to provide the undercoating layer made of resin material or mixture of a resin material and a cross-linking agent with a desired thickness. However, in order to accomplish the purpose of the item 3, it is necessary to mix electrical conductive powder into the undercoating layer and in this case there occurs the problem of the output fluctuation and modulation noise.

According to the known process, the undercoating layer is formed by coating the coating material in which electric conductive powder is dispersed within resin solution then being dried under a high temperature for volatizing the solution. According to the conventional process of making the coating layer, it has been believed that the undercoating layer should be as thin as possible by the reason described below. In a mechanical coating process, stress caused by coating force occurs not only on the coating layer but on the undercoating layer. Therefore, the undercoating layer must resist against the stress. In a case where the undercoating layer is thicker than a predetermined value, the undercoating layer is deformed by the stress of the coating force due to flexibility of the undercoating layer.

On the contrary, in order to form a thin undercoating layer, the coating material must have a low viscosity. Therefore, in the prior art, the coating material was prepared by solving the solid material having a relatively low density in a great amount of the solvent for lowering the viscosity of the coating material. In fact, in the Japanese Patent Publication (unexamined) of 150129/1973, it is described that the density of the resin solution including electric conductive powder for the undercoating layer is 1 to 10 % so as to provide a thin undercoating layer.

However, in a case where the undercoating layer is formed by such a coating material of low viscosity shows various disadvantages described below ;

2

1. It is very difficult to uniformly disperse the primary grain of the electric conductive powder in the resin material, therefore, the powder is undesirably dispersed in the form of a relatively large secondary grain with unevenness, whereby there may occur voids in the coated layer formed by the coating material as described above with conductive powder dispersed.

2. In a case where the density of the coating material is relatively low with a great amount of the solution, there tends to occur a large amount of voids due to vaporization of the solvent by dry in addition to the voids occurred by the reason of the above item 1, whereby the flatness of the surface of the magnetic recording disc is undesirably harmed.

When the magnetic layer is coated on the undercoating layer having the voids, the magnetic material enters into the voids, thereby forming unevenness in either the thickness of the magnetic layer and the distribution density of the magnetic material caused by the voids which are distributed ununiformly in the undercoating layer, thereby resulting in an output fluctuation.

3. Furthermore, the solvent contained in the magnetic coating material is solved and entered in the undercoating layer partly because the voids enlarge the surface area of the undercoating layer, whereby the undercoating layer is partly solved and the resin material of the undercoating layer is entered in the magnetic layer, resulting in change of the component of the magnetic coating composition, and in turn causing the density of the magnetic material of the magnetic coating layer to be ununiform, and in turn resulting in increase of the modulation noise.

Through the analysis of the known magnetic recording disc as described above, the inventors have discovered the following fact that the main reason of the output fluctuation of the prior art magnetic recording disc is not caused by the thickness of the undercoating layer but is caused by either the voids in the undercoating layer and the ununiform surface of the undercoating layer. Thus it has been discovered that a magnetic recording disc having a uniform flatness of the surface without the voids in the undercoating layer can effectively prevent the output fluctuation and modulation noise.

It has been further discovered by the present inventors that the greater the thickness of the undercoating layer, the greater the rate of the increment of the residual magnetic flux density Br, thereby resulting in increment of the output.

In addition, the greater the thickness of the undercoating layer, the smaller the effect of the unevenness, fish eye and the oligomer or filler of the surface of the substrate and the surface resistivity and optical permeability of the magnetic recording disc can be effectively decreased.

## Summary of the invention

An essential object of the present invention is to provide a magnetic recording disc which is possible to form recording tracks with a high density.

Another object of the present invention is to provide a magnetic recording disc having a high S/N ratio with a small fluctuation of the output and a low modulation noise.

A further object of the present invention is to provide a magnetic recording disc having a isotropic magnetic characteristic in the circumferential direction.

In one aspect of the magnetic recording disc according to the present invention, a flexible substrate of non magnetic material is coated by a undercoating layer of 1.0 to 10 micrometers with a surface roughness of lower than 0.035 micrometers composed or electrically conductive powder and polyurethane resin including a cross-linking agent and the undercoating layer is coated with a magnetic layer having magnetic powder dispersed in bonding material.

The density of the solid composition of the coating material of the undercoating layer may be higher than 10 %, preferably than 20 % and the thickness of the undercoating layer is 1.0 micrometer to 10 micrometers, preferably 1.0 to 3.0 micrometers.

The recording medium formed in the manner described above may be subjected to a calendering process so as to eliminate the voids in the undercoating layer for obtaining the surface roughness lower than 0.030 micrometers.

By employing the mixture of a polyurethane resin and a cross-linking agent as the resin material of the undercoating layer, it can be prevented that the undercoating material is solved and entered in the magnetic layer at the coating process of the magnetic layer. In the magnetic recording disc formed by the methods as described above with the high output magnetic layers of the residual magnetic flux density Br higher than 0,09 T (900 gauss), a small output fluctuation and a low modulation noise with high S/N ratio can be accomplished.

## Description of the preferred embodiment

In one specific aspect of the magnetic recording disc according to the present invention, the material for the flexible substrate is not limited, various composition, for examples, such as polyethylene terephthalate ; polyester group such as polyethylene-2 or 6-naphthalate ; polyolefine group such as polyethylene or polypropylene ; cellulose acetate such as cellulose triacetate, cellulose diacetate, polyimide and/or polyamide can be used as the substrate. Preferably, the thickness of the substrate may be in a range of 10 to 100 micrometers.

As the electrical conductive material of the undercoating layer, carbon powder such as carbon black, graphite, carbonblack with graphite layer ; metal or metallic alloy such as silver, copper, tin, aluminium, zinc, chromium and/or titanium can be used by selecting at least one of them with a possible diameter of the grain. Preferably, carbon black, more particularly Mogul® L (having a grain diameter 24 nm, oil absorption 60 cm$^3$/100 g, dibutyl phthalate (DBP) surface area 138 m$^2$/g, Cabot Corporation in U.S.A) is used.

As polyurethane resin, polyether polyurethane bearing at its terminal, at least one of an isocyanate group and a hydroxyl group may be used. As the specific example of the polyurethane resin, Takenate® M-407, Takeda Chemical Industries Co ; Pandex® T-5250 or T-5201, Dainippon ink and Chemicals, Inc. or Desmoffen® 1200, Bayer Ltd. may be used. As the specific examples of the isocyanate compounds for the cross-linking agent, Desmodur®L or Colonate®L, may be used.

Preferably, the polyurethane resin and the magnetic powder are mixed by the ratio of 10 : 90 (by weight), more preferably 10 : 80 to 70 : 30 and further more preferably 40 : 60 to 60 : 40.

The resin material as described above and magnetic powder are mixed to provide coating material by a dispersing machine such as ball mill, sand mill or pebble mill with at least any one of the solvent such as toluene, xylene, methyl ethyl ketone (MEK), methyl isobutyl ketone (MIBK), cyclohexanon, aceton tetrahydrofuran (THF), ethyl acetate, dimethyl formamide (DMF). The coating material may be coated by a knife coater, gravure roll coater or reverse roll coater. A specific attention should be paid for the density of the coating material so that the solid component of the coating material should be in the range higher than 10 %. After the coating material is coated on the substrate for making the undercoating layer, the calendering process may be performed on the undercoating layer if necessary.

As to the magnetic layer to be formed on the undercoating layer thus formed, the shape of the magnetic powder may be acicular or grain metallic iron powder, metallic cobalt powder ; other alloy powder ; $\gamma$-Fe$_2$O$_3$ powder, Fe$_3$O$_4$ powder or intermediate oxide or cobalt doped magnetic particle thereof may be used. In particular the cobalt doped magnetic oxided iron particle is preferred. In addition, the magnetic powder having a saturation magnetization $\sigma_s$ of greater than 60 Tm$^3$/g (60 emu/g) with a coercive force Hc of greater than 15,9 K A/m (200 Oe) is preferably used.

Specific examples of the binder to bind the magnetic powder to the substrate are a polyvinyl chloride resin, a polyvinyl acetate resin, a copolymer of vinyl chloride and vinyl acetate, a copolymer of vinyl chloride, vinyl acetate and vinyl alcohol, a polyurethane resin, a cellulose type resin, a polyester resin and its sulfonate, a copolymer of vinylidene chloride and acrylonitrile, a copolymer of acrylonitrile and butadiene, an isoprene rubber, a butadiene rubber and their mixtures. The binder optionally contains a cross-linking agent (e. g. an isocyanate compound having a low molecular weight) and further a fatty acid, a fatty acid ester, a hydrocarbon type lubricant, fluorine-containing lubricant, a silicone type lubricant.

In order to form the magnetic layer, the magnetic coating material is prepared using the magnetic powder as described above with the binder esin and suitable adding agent and the sovlent as described with reference to the material of the undercoating layer, then coated on the undercoating layer in a similar process.

It is noted for producing the magnetic recording disc having a magnetic isotropic characteristic in the circumferential direction to make the magnetic orientation of the magnetic powder isotropic at the time of coating the magnetic layer on the undercoating layer. In a case where the magnetic recording discs are shaped by punching after the undercoating layer and magnetic layer are formed on the substrate, preferably, the process of magnetic orientation against the magnetic powder is omitted or the random orientation is performed at the time of punching. In a case where shaping into the disc form is performed by the punching process before the magnetic layer is coated on the undercoating layer, preferably the orientation process may be performed by so called spin coating method. A calendering process may be performed without causing any problem after coating and/or drying the magnetic layer.

In a case where the magnetic layers are formed on both sides of the disc, preferably the undercoating layers are formed on both sides of the substrate first and in turn the both of the magnetic layers may be formed on the both undercoating layers simultaneously rather than finishing one side first then finishing another side for avoiding curling of the disc. In this case, it is most desired to perform the calendering process for each of the undercoating layers when the undercoating is finished.

Example 1

Component of the coating material of the electrically conductive non magnetic material.

| | |
|---|---|
| Mogul®L (carbon black) | 100 by weight |
| Vagh (a copolymer of vinyl chloride, vinyle acetate and vinyl alcohol) | 27 by weight |
| T 5250 (polyester polyurethane resin) | 27 by weight |
| Colonate®L (tri-functional low molecular weight isocyanate compound) | 13 by weight |
| cyclohexanon | 200 by weight |
| toluene | 200 by weight |

The above composition was mixed and dispersed in the ball mill and prepared the undercoating material, which was coated on both sides of a polyester film of thickness of 75 micrometers having the difference $6 \times 10^{-6}$ °C between the maximum value and the minimum value of the coefficient of thermal expansion in the surface direction of the magnetic recording disc, then dried and in turn the calendering process was performed so as to form both of the undercoating layers with the thickness of 2.0 micrometers with a surface roughness of 0.020 micrometers. The surface roughness was measured by the contact needle surface roughness meter made by Tokyo Seimitsu Co. and the result was represented by C.L.A. value (center line average) with the cut-off 0.08 mm.

The magnetic coating material described below was coated on the undercoating layer formed as described above with the thickness of 1.0 micrometer and dried, further the calendering process was performed, whereby the magnetic layers were formed and soaked for one minute in the solution consisting of oleyloleate 45 by weight, stearic acid 5 by weight and hexan 1 000 by weight and subsequently the lufricant was impregnated and in turn the magnetic recording medium was punched to shape into the round magnetic recording disc.

Component of the magnetic coating material

| | |
|---|---|
| Magnetic powder ; $\gamma$-$Fe_2O_3$ including Cobalt with the coercive force Hc of 51,7 kA/m (650 Oe) and $\sigma$s of 72 $Tm^3$/kg (72 emu/g) | 300 by weight |
| Vagh (a copolymer of vinyl chloride, vinyl acetate and vinyl alcohol | 57 by weight |
| N1432J (a copolymer of acrylonitrile and butadiene, Nippon Zeon Co. Ltd.) | 11 by weight |
| Colonate®L (tri-functional low molecular weight isocyanate compound) | 7 by weight |
| HS-500 (carbon black, Asahi Carbon Co.) | 34 by weight |
| $\alpha$-$Fe_2O_3$ powder | 11 by weight |
| methylisobutylketone | 420 by weight |
| toluene | 420 by weight |

Example 2

Magnetic recording discs similar to the example 1 were prepared without calendering process at the time of making undercoating layer with the thickness of 4.0 micrometers. The surface roughness was 0.030 micrometers.

Example 3

Magnetic recording discs were prepared in the same manner as in the example 1 except for changing the difference of the maximum value and minimum value of the coefficient of thermal expansion of the substrate in the surface direction of the disc to $16 \times 10^{-6}$ °C$^{-1}$.

Example 4

Magnetic recording discs were prepared in the same manner as in the example 1 except for changing the amount of the magnetic powder of $\gamma$-$Fe_2O_3$ including cobalt to 270 by weight from 300 by weight, the amount of Vagh to 80 by weight from 57 by weight, the amount of N1432J to 15 by weight from 11 by weight and the amount of Colonate®L to 10 by weight from 7 by weight.

Comparison 1

In the magnetic recording disc of the example 2, the component of the electrically conductive non magnetic material of the coating material were changed as below.

| | |
|---|---|
| Carbon black (SC carbon, Colombia Chemical CO.) | 10 by weight |
| polyester resin (Pylon TS-9504, Toyo Boseki CO.) | 25 by weight |
| Methylethylketon | 200 by weight |
| Cyclohexanon | 100 by weight |

The thickness of the undercoating layer was 0.8 micrometers and the surface roughness was 0.040 micrometers.

Comparison 2

Magnetic recording discs were prepared in the same manner as in the example 2 except for changing the thickness of the undercoating layer to 20.0 micrometers from 4.0 micrometers. The surface roughness of the undercoating layer was 0.050 micrometers.

5

Comparison 3

Magnetic recording discs were prepared in the same manner as in the example 1.except for changing the thickness of the undercoating layer to 20.0 micrometers from 2.0 micrometers. The surface roughness of the undercoating layer was 0.030 micrometers.

Comparison 4

Magnetic recording discs were prepared in the same manner as in the comparison 1 except for changing the amount of the magnetic powder of $\gamma$-$Fe_2O_3$ including cobalt to 270 by weight from 300 by weight, the amount of Vagh to 80 by weight from 57 by weight, the amount of N1432J to 15 by weight from 11 by weight and the amount of Colonate®L to 10 by weight from 7 by weight.

The magnetic characteristics of the examples and comparisons were measured under the magnetic field of 795 K A/m (10kOe) by magnetometer VSM-3 of sample vibration type made by Toei Kogyo Co. Also the magnetic characteristic of the magnetic powder added in the magnetic coating material was measured in the similar way.

The result of the measurement is shown in the Table 1.

The magnetic recording discs of the examples 1 through 4 and comparisons 1 through 4 were tested in terms of the output value, modulation noise and output fluctuation under the circumstance of temperature of 10 °C and 40 % RH with the writing in frequency 125 kHz, rotation speed 300 r.p.min, the recording density 22.8 K bit per cm (9K BPI, K bit per inch) and the track width 75 micrometers using floppy disc characteristic measuring machine made by Hitachi Maxell Co.

The output is represented by the following equation ;

$$A = (a + b)/2,$$

wherein a is the average output value with reference to the output wave form including the maximum output for one round track length with the magnetic field reversed by 0,2 T (2 000 gauss) and b is the average output value with reference to the output wave form including the minimum output for one round track length with the magnetic field reversed by 0,2 T (2 000 gauss).

The output fluctuation is calculated by the following equation ;

$$B = (a - b)/(a + b) \times 100 \%.$$

The modulation noise is represented by the noise level at 120 kHz.

The magnetic recording discs·to which the data were recorded were allowed to stand in the circumstance at 40 °C and 40 % RH without additional recording, after the output, output fluctuation (referred to as Output Fluc. in Table 1) and modulation noise (Mod. Noise) were stabilized, measurement was made. The result of the measurement is represented in the Table 1.

As understood from the result of the measurement, the magnetic recording disc according to the present invention shows a high output, with the output fluctuation and modulation noise ·can be effectively reduced. Also the high output value with low fluctuation and modulation noise can be maintained even if the circumstances in which the magnetic recording disc is placed is changed.

It is noted that a magnetic recording disc which enables to form a high density recording track can be accomplished by only combination of a non magnetic substrate and a magnetic layer having a high S/N ratio.

Table 1

|  | Br T (Gauss) | Hc KA/m (Oe) | 10 °C 40 % RH | | | 40 °C 40 % RH | | |
|---|---|---|---|---|---|---|---|---|
|  |  |  | Output | Mod. noise | Output fluc. | Output | Mod. noise | Output fluc. |
| Ex. 1 | 0,100 (1 000) | 50,1 (630) | (dB) + 2.5 | (dB) − 3.0 | (%) 2.0 | (dB) + 1.4 | (dB) − 4.0 | (%) 3.0 |
| Ex. 2 | 0,105 (1 050) | 49,7 (625) | + 2.5 | − 2.0 | 4.0 | + 1.4 | − 3.0 | 5.0 |
| Ex. 3 | 0,100 (1 000) | 50,1 (630) | + 2.0 | − 2.5 | 2.0 | − 0.2 | − 2.8 | 12.0 |
| Ex. 4 | 0,085 (850) | 51,3 (645) | + 0.2 | − 2.5 | 2.0 | − 0.9 | − 2.6 | 3.0 |

# 0 152 058

Table 1 (Fortsetzung)

| | Br T (Gauss) | Hc KA/m (Oe) | 10 °C 40 % RH | | | 40 °C 40 % RH | | |
|---|---|---|---|---|---|---|---|---|
| | | | Output | Mod. noise | Output fluc. | Output | Mod. noise | Output fluc. |
| Comp. 1 | 0,095 (950) | 50,5 (635) | + 1.8 | + 2.0 | 9.0 | + 0.7 | + 1.1 | 10.0 |
| Comp. 2 | 0,110 (1 100) | 49,3 (620) | + 1.6 | + 1.0 | 10.0 | + 0.5 | + 0.2 | 11.0 |
| Comp. 3 | 0,110 (1 100) | 49,3 (620) | + 1.8 | − 0.2 | 9.0 | + 0.7 | − 1.1 | 10.0 |
| Comp. 4 | 0,080 (800) | 51,7 (650) | 0 | 0 | 9.0 | − 1.1 | − 0.5 | 10.0 |

**Claims**

1. A magnetic recording disc comprising a non magnetic flexible substrate, at least one undercoating layer formed on the one surface of the substrate with a thickness of 1.0 to 10 micrometers and a surface roughness smaller than 0.035 micrometers, said undercoating layer including electrical conductive powder, polyurethane resin and cross-linking agent, and at least one magnetic layer formed on the undercoating layer, said magnetic layer including magnetic powder dispersed in binding agents.

2. The magnetic recording disc according to claim 1, wherein said electrical conductive powder is carbon black.

3. The magnetic recording disc according to claim 1, wherein said polyurethane resin is at least one selected from the group consisting of polyetherpolyurethane and polyesterpolyurethane and bears, at its terminal, at least one of an isocyanate group and a hydroxyl group.

4. The magnetic recording disc according to claim 1, said undercoating layer is composed of the polyurethane resin and electrical conductive powder mixed in a ratio of 10 : 90 to 90 : 10 (by weight).

5. The magnetic recording disc according to claim 1, wherein said undercoating layer is composed of the polyurethane resin and electrical conductive powder mixed in a ratio of 10 : 80 to 70 : 30 (by weight).

6. The magnetic recording disc according to claim 1, wherein said undercoating layer is composed of the polyurethane resin and electrical conductive powder mixed in a ratio of 40 : 60 to 60 : 40 (by weight).

7. The magnetic recording disc according to claim 1, wherein said cross-linking agent includes a isocyanate compound having a low molecular weight.

8. The magnetic recording disc according to claim 1, wherein the thickness of the undercoating layer is 1.0 to 3.0 micrometers.

9. The magnetic recording disc according to claim 1, wherein the surface roughness of the undercoating layer is smaller than 0.030 micrometers.

10. The magnetic recording disc according to claim 1, wherein said magnetic powder has a saturation magnetization $\sigma$s higher than 65 Tm$^3$/g (65 emu) and coercive force Hc higher than 15,9 kA/m (200 Oe).

11. The magnetic recording disc according to claim 1, wherein said magnetic powder is cobalt doped oxide iron powder.

12. The magnetic recording disc according to claim 1, wherein said non magnetic flexible substrate has a difference of the maximum value and minimum value of the coefficient of thermal expansion lower than $8 \times 10^{-6}$ °C$^{-1}$.

13. The magnetic recording disc according to claim 1, wherein said undercoating layer and magnetic layer are formed on the both sides of the substrate.

14. A process of making a magnetic recording disc comprising a step for dispersing a magnetic powder, a polyurethane resin and a cross-linking agent in an organic solvent for preparing undercoating layer material, a step of coating the undercoating material on a non magnetic flexible substrate for forming a undercoating layer, a step of forming a magnetic layer, thereby preparing magnetic recording medium, and step for forming a magnetic recording disc by punching the magnetic recording medium, characterized in that the total amount of the electrical powder, polyurethane resin and cross-linking agent by weight is higher than 10 % of the sum of the said total amount and the organic solvent.

15. The process of making a magnetic recording disc according to claim 14 characterized by further comprising a calendering process effected on the undercoating layer.

7

16. The process of making a magnetic recording disc according to claim 14, said undercoating layer is formed in a range 1.0 to 10 micrometers under an ambient temperature when dried.

**Patentansprüche**

1. Magnetische Aufzeichnungsscheibe aus einem nichtmagnetischen flexiblen Träger, wenigstens einer auf der einen Oberfläche des Trägers gebildeten Grundschicht mit einer Dicke von 1,0 bis 10 μm und einer Oberflächenrauhigkeit von weniger als 0,035 μm, wobei diese Grundschicht ein elektrisch leitfähiges Pulver, ein Polyurethan-Harz und ein Vernetzungsmittel umfaßt, und wenigstens einer auf der Grundschicht gebildeten magnetischen Schicht, wobei die magnetische Schicht ein in Bindemittel dispergiertes magnetisches Pulver umfaßt.

2. Magnetische Aufzeichnungsscheibe nach Anspruch 1, worin das elektrisch leitfähige Pulver Ruß ist.

3. Magnetische Aufzeichnungsscheibe nach Anspruch 1, worin das Polyurethan-Harz wenigstens ein aus der aus Polyetherpolyurethan und Polyesterpolyurethan bestehenden Gruppe ausgewähltes Harz ist und an seinem Ende wenigstens eine Gruppe aus einer Isocyanat-Gruppe und einer Hydroxyl-Gruppe enthält.

4. Magnetische Aufzeichnungsscheibe nach Anspruch 1, worin die Grundschicht aus dem Polyurethan-Harz und dem elektrisch leitfähigen Pulver gemischt in einem (Gewichts-) Verhältnis 10 : 90 bis 90 : 10 zusammengesetzt ist.

5. Magnetische Aufzeichnungsscheibe nach Anspruch 1, worin die Grundschicht aus dem Polyurethan-Harz und dem elektrisch leitfähigen Pulver gemischt in einem (Gewichts-) Verhältnis 10 : 80 bis 70 : 30 zusammengesetzt ist.

6. Magnetische Aufzeichnungsscheibe nach Anspruch 1, worin die Grundschicht aus dem Polyurethan-Harz und dem elektrisch leitfähigen Pulver gemischt in einem (Gewichts-) Verhältnis 40 : 60 bis 60 : 40 zusammengesetzt ist.

7. Magnetische Aufzeichnungsscheibe nach Anspruch 1, worin das Vernetzungsmittel eine Isocyanat-Verbindung mit niedrigem Molekulargewicht umfaßt.

8. Magnetische Aufzeichnungsscheibe nach Anspruch 1, worin die Dicke der Grundschicht 1,0 bis 3,0 μm beträgt.

9. Magnetische Aufzeichnungsscheibe nach Anspruch 1, worin die Oberflächenrauhigkeit der Grundschicht kleiner als 0,030 μm ist.

10. Magnetische Aufzeichnungsscheibe nach Anspruch 1, worin das magnetische Pulver eine Sättigungsmagnetisierung $\sigma_s$ von mehr als 65 $Tm^3/g$ (65 emu) und eine Koerzitivkraft Hc von mehr als 15,9 kA/m (200 Oe) aufweist.

11. Magnetische Aufzeichnungsscheibe nach Anspruch 1, worin das magnetisch Pulver mit Cobalt dotiertes Eisenoxid-Pulver ist.

12. Magnetische Aufzeichnungsscheibe nach Anspruch 1, worin der nicht-magnetische flexible Träger einer Differenz zwischen dem Maximalwert und dem Minimalwert des Koeffizienten der thermischen Ausdehnung von weniger als $8 \times 10^{-6}$ °$C^{-1}$ aufweist.

13. Magnetische Aufzeichnungsscheibe nach Anspruch 1, worin die Grundschicht und die magnetische Schicht auf den beiden des Substrats gebildet sind.

14. Verfahren zur Herstellung einer magnetischen Aufzeichnungsscheibe, umfassend einen Schritt zum Dispergieren eines magnetischen Pulvers, eines Polyurethan-Harzes und eines Vernetzungsmittels in einem organischen Lösungsmittel zur Herstellung eines Grundschicht-Materials, einen Schritt des Auftragens des Grundschicht-Materials auf einen nicht-magnetischen biegsamen Träger zur Bildung einer Grundschicht, einen Schritt der Bildung einer magnetischen Schicht, um dadurch ein magnetisches Aufzeichnungsmedium herzustellen, und einen Schritt der Bildung einer magnetischen Aufzeichnungsscheibe durch Stanzen des magnetischen Aufzeichnungsmaterials, dadurch gekennzeichnet, daß die Gesamt-Gewichtsmenge des magnetischen Pulvers, Polyurethan-Harzes und Vernetzungsmittels größer ist als 10 % der Summe aus der Gesamtmenge und dem organischen Lösungsmittel.

15. Verfahren zur Herstellung einer magnetischen Aufzeichnungsscheibe nach Anspruch 14, dadurch gekennzeichnet, daß es weiterhin ein Verfahren des Kalandrierens umfaßt, das auf der Grundschicht bewerkstelligt wird.

16. Verfahren zur Herstellung einer magnetischen Aufzeichnungsscheibe nach Anspruch 14, dadurch gekennzeichnet, daß die Grundschicht in einem Bereich von 1,0 bis 10 μm unter Umgebungstemperatur, wenn sie getrocknet ist, gebildet wird.

**Revendications**

1. Un disque d'enregistrement magnétique comprenant un substrat flexible non magnétique, au moins une sous-couche de revêtement formée sur une surface de substrat avec une épaisseur de 1,0 à 10 micromètre, et une rugosité de surface inférieure à 0,035 micromètre, cette sous-couche de revêtement incluant poudre conductrice de l'électricité, résine de polyuréthanne, et agent de réticulation, et au moins une couche magnétique formée sur la sous-couche de revêtement, cette couche magnétique incluant une poudre magnétique dispersée dans des agents liants.

2. Le disque d'enregistrement magnétique selon la revendication 1, dans lequel ladite poudre conductrice de l'électricité est du noir de carbone.

3. Le disque d'enregistrement magnétique selon la revendication 1, dans lequel ladite résine de polyuréthanne est au moins l'une de celles sélectionnées dans le groupe comprenant le polyétherpolyuréthanne et le polyesterpolyuréthanne et porte à son extrémité au moins un des groupes isocyanate et hydroxyle.

4. Le disque d'enregistrement magnétique selon la revendication, dans lequel ladite sous-couche de revêtement est composée de résine de polyuréthanne et de poudre conductrice de l'électricité, mélangées dans un rapport de 10 : 90 à 90 : 10 (en poids).

5. Le disque d'enregistrement magnétique selon la revendication 1, dans lequel ladite sous-couche de revêtement est composée de la résine de polyuréthanne et de la poudre conductrice de l'électricité, mélangées dans un rapport de 10 : 80 à 70 : 30 (en poids).

6. Le disque d'enregistrement magnétique selon la revendication 1, dans lequel ladite sous-couche de revêtement est composée de la résine de polyuréthanne et de la poudre conductrice de l'électricité, mélangées dans un rapport de 40 : 60 à 60 : 40 (en poids).

7. Le disque d'enregistrement magnétique selon la revendication 1, dans lequel ledit agent de réticulation inclut un composé isocyanate ayant un bas poids moléculaire.

8. Le disque d'enregistrement magnétique selon la revendication 1, dans lequel l'épaisseur de la sous-couche de revêtement est de 1,0 à 3,0 micromètres.

9. Le disque d'enregistrement magnétique selon la revendication 1, dans lequel la rugosité de surface de la sous-couche de revêtement est inférieure à 0,030 micromètre.

10. Le disque d'enregistrement magnétique selon la revendication 1, dans lequel ladite poudre magnétique a une saturation magnétique $\sigma$s supérieure à 65 $Tm^3/g$ (65 emu) et une force coercitive Hc supérieure à 15,9 kA/m (200 Oe).

11. Le disque d'enregistrement magnétique selon la revendication 1, dans lequel ladite poudre magnétique est de la poudre d'oxyde de fer dopée au cobalt.

12. Le disque d'enregistrement magnétique selon la revendication 1, dans lequel ledit substrat flexible non magnétique a une différence entre la valeur maximale et la valeur minimale du coefficient de dilatation thermique à $8 \times 10^{-6}$ °C$^{-1}$.

13. Le disque d'enregistrement magnétique selon la revendication 1, dans lequel ladite sous-couche de revêtement et la couche magnétique sont formées sur les deux côtés du substrat.

14. Un procédé pour fabriquer un disque d'enregistrement magnétique comprenant une étape pour disperser une poudre magnétique, une résine de polyuréthanne et un agent de réticulation dans un solvant organique pour préparer une matière pour sous-couche de revêtement, une étape d'enduction d'un substrat flexible non magnétique à l'aide de la matière pour sous-couche de revêtement pour former une sous-couche de revêtement, une étape pour former une couche magnétique, préparant ainsi un milieu d'enregistrement magnétique, et une étape pour former un disque d'enregistrement magnétique par matriçage du milieu d'enregistrement magnétique, caractérisé en ce que la quantité totale de la poudre électrique, de la résine de polyuréthanne et de l'agent de réticulation, en poids, est supérieure à 10 % de la somme de ladite quantité totale et du solvant organique.

15. Le procédé de fabrication d'un disque d'enregistrement magnétique selon la revendication 14, caractérisé en ce qu'il comprend en outre un procédé de calandrage effectué sur la sous-couche de revêtement.

16. Le procédé de fabrication d'un disque d'enregistrement magnétique selon la revendication 14, dans lequel ladite sous-couche de revêtement est formée dans un intervalle de 1,0 à 10 micromètres à la température ambiante lorsqu'elle est séchée.